# FASCICULE DE BREVET EUROPEEN

(11) **EP 0 540 802 B1**
(45) Date de publication et mention de la délivrance du brevet: **17.04.1996**
(21) Numéro de dépôt: 91810861.4
(22) Date de dépôt: 07.11.1991
(51) Int. Cl.: A61C 17/02

(54) **Appareil hydraulique pour les soins corporels, notamment les soins buccaux**
Hydraulische Vorrichtung zur Körperpflege, insbesondere zur Mundpflege
Hydraulic apparatus for body care especially for oral care

(43) Date de publication de la demande: 12.05.1993
(73) Titulaire: LES PRODUITS ASSOCIES L.P.A. BROXO S.A., CH-1225 Chene-Bourg (CH)
(72) Inventeur: Jousson, Jean-Pierre, CH-1207 Geneve (CH)
(74) Mandataire: Jörchel, Dietrich R.A.

(56) Documents cités:
- EP-A- 0 267 095
- DE-A- 2 444 441
- FR-A- 2 334 336

## Description

L'invention concerne un appareil hydraulique pour les soins corporels, notamment pour les soins buccaux, selon le préambule de la revendication 1 ou 2.

De tels appareils munis d'une buse de giclage sont connus, par exemple du DE-C-2 653 494 (ou FR-A-2 334 336). La plate-forme pour le logement du tuyau en forme de ressort à boudin (aussi nommé très souvent tuyau spiralé) et la pièce à main enfoncée dans une ouverture de la plate-forme à l'état de repos de l'appareil, est formée par un gradin décalé à l'intérieur du boitier de l'appareil. En général, la disposition est telle que le tuyau et la pièce à main dépourvue de buse et éventuellement les buses, placés sur ce gradin ne dépassent pas les dimensions extérieures du boîtier. Cette disposition est avantageuse en ce qui concerne le rangement des éléments de l'appareil pendant sa non utilisation, de même que pour son transport, car elle réduit son encombrement. Grâce à cette disposition le réservoir, à l'état de repos, peut être retourné et posé sur le boîtier comme un couvercle.

Cependant la fixation rigide du tuyau à l'orifice de sortie du boîtier rend la manipulation de ce tuyau inconfortable, et est une source de bruit lors du fonctionnement de l'appareil. Ce tuyau en matière plastique préformé est assez rigide et forme sous l'action de sa précontrainte, pendant sa non utilisation, un ressort à boudin à spires jointives, l'extrémité fixe du tuyau étant orientée en général verticalement. Lors de l'utilisation, le tuyau doit être étiré pour l'éloigner du boîtier, mais une partie reste sur la plate-forme et pendant le fonctionnement de l'appareil il peut être en contact à un ou plusieurs endroits du boîtier, ce qui provoque un bruit désagréable, le tuyau vibrant selon la fréquence de la pompe et les pulsations du liquide, en général de 50 Hz environ, il frappe avec cette fréquence contre le boîtier, et l'utilisateur pour empêcher ce bruit doit toujours excercer une traction suffisante dans une direction bien déterminée sur le tuyau pour l'écarter du boîtier. De plus, ce contact du tuyau avec le boitîer peut créer une usure voire une perforation du tuyau.

En outre, la position de la pièce à main et du tuyau logé sur ce gradin décalé à l'intérieur rend leur accessibilité peu aisée. Ce gradin étant limité sur un ou plusieurs côtés par une, respectivement plusieurs parois du boîtier, ces parois sont très proches, voire en contact avec le tuyau. Si, comme cela est le cas de nombreuses variantes connues, la disposition de l'appareil est telle qu'en position de travail, le réservoir est disposé au dessus de cette plate-forme, et donc recouvre l'espace où se trouvent le tuyau, la pièce à main et éventuellement les buses de rechange, l'accessibilité à ces éléments et leur entretien sont particulièrement difficiles.

Avec un appareil de ce type, la hauteur de l'espace libre entre la plate-forme et le dessous du réservoir permet de placer verticalement la pièce à main seule, formée par un porte-buse, mais pas le porte-buse équipé d'une buse, les buses de rechange étant positionnées verticalement à côté du porte-buse sur la même plate-forme. Pour cette raison, si l'utilisateur pose le réservoir rempli sur le boîtier, l'eau qui sort du réservoir et traverse la pompe peut, selon le principe des vases communicants, monter dans le porte-buse et s'écouler à l'extrémité supérieure de celui-ci, puisque cette extrémité est plus basse que la hauteur de l'eau dans le réservoir. Pour éviter cet inconvénient, l'utilisateur doit, avant de placer le réservoir rempli, prendre le porte-buse, l'écarter de la plate-forme et fixer la buse sur lui ou le maintenir plus haut que le réservoir, ce qui n'est pas très commode.

Cet arrangement connu du tuyau et de la pièce à main est donc sucsceptible de géner l'utilisateur dans ses manipulations.

La présente invention a pour but de faciliter la manipulation de la pièce à main et de son tuyau, tout en conservant un encombrement réduit de l'appareil lorsqu'il n'est pas utilisé.

Ce but est atteint par les caractéristiques de la revendication 1 ou de préférence de la revendication 2.

Ces dispositions présentent les principaux avantages suivants:
- pendant le fonctionnement de l'appareil, le tuyau peut être très facilement éloigné du boîtier et ne le touche plus, donc le bruit désagréable et l'usure provoqués par les chocs avec le boîtier sont supprimés;
En outre, avec la forme d'exécution selon la revendication 2:
- la pièce à main ainsi que les buses ou les brosses à dents de rechange positionnées sur la plate-forme sont beaucoup plus accessibles;
- avant de poser le réservoir rempli sur le boîtier, il suffit que l'utilisateur tourne simplement d'un petit angle la plate-forme pour dégager la pièce à main du réservoir, ce qui lui permet de fixer une buse sur ladite pièce à main sans l'enlever de la plate-forme. Ceci évite, quand le réservoir rempli est placé sur le boîtier, un écoulement de l'eau puisque l'ensemble pièce à main plus buse est plus haut que le réservoir. L'utilisateur peut également dégager plus largement la plate-forme pour rendre accessible toute sa surface. Bien sûr l'utilisateur peut refaire pivoter la plate-forme dans sa position de repos après avoir saisi la pièce à main afin de ne pas être gêné lors des manipulations.

Des formes d'éxécution préférées résultent des revendications dépendantes.

L'invention sera décrite plus en détail au moyen d'un exemple d'un appareil muni d'un porte-buse en tant que pièce à main et de quatre buses.

La figure 1 représente une vue latérale de l'appareil dans sa position de non utilisation, avec le réservoir renversé recouvrant le boîtier.

La figure 2 montre une vue de dessus du boîtier, avec le réservoir et la plate-forme enlevés.

La figure 3 est une vue de dessus de la plate-forme seule.

La figure 3a est une coupe de la plate-forme selon IIIa-IIIa de la figure 3.

La figure 4 est une vue latérale de l'appareil, avec le réservoir en position opérante et la plate-forme encore en position de repos, c'est à dire rétractée au-dessous du réservoir.

La figure 5 est une vue de dessus de l'appareil selon la figure 4, avec le réservoir enlevé.

La figure 6 est une vue latérale de l'appareil dans une position de préparation, avec la plate-forme partiellement pivotée vers l'extérieur pour permettre la fixation d'une buse sur la pièce-à-main restée sur la plate-forme.

La figure 7 est une vue de dessus de l'appareil selon la figure 6, avec le réservoir enlevé.

La figure 8 est une vue latérale sur le côté étroit de l'appareil, avec la plate-forme complètement pivotée vers l'extérieur.

La figure 9 est une vue de dessus de l'appareil selon la figure 8, avec le réservoir enlevé.

La figure 10 est une vue latérale de l'appareil en position d'utilisation, avec la pièce-à-main écartée du boîtier et la plate-forme remise en position de repos en dessous du réservoir.

La figure 11 est une vue agrandie en coupe de la disposition du raccord tournant.

La figure 12 est une vue de dessous de la douille de retenue du raccord tournant.

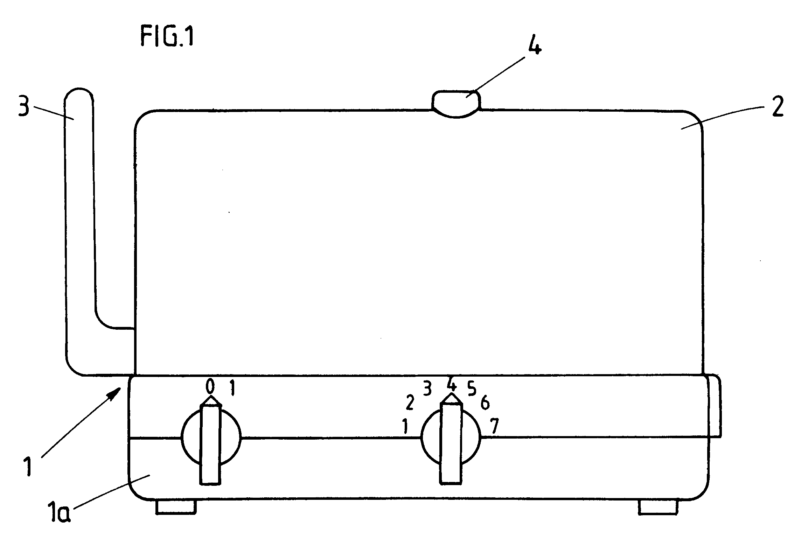

Selon les figures 1 à 5, l'appareil comprend un boitîer 1 contenant une pompe hydraulique entraînée par un moteur électrique, un réservoir 2 de liquide avec une anse 3 et une plate-forme 12 sur laquelle sont posés une pièce-à-main 17 en forme de porte-buse et quatre buses de rechange 19. Le moteur électrique peut être connecté au moyen d'un câble, non représenté, à une prise extérieure du réseau. La pièce-à-main 17 est connectée par un tuyau flexible 18 à l'orifice de sortie 10 du boîtier 1 en communication avec la sortie de la pompe.

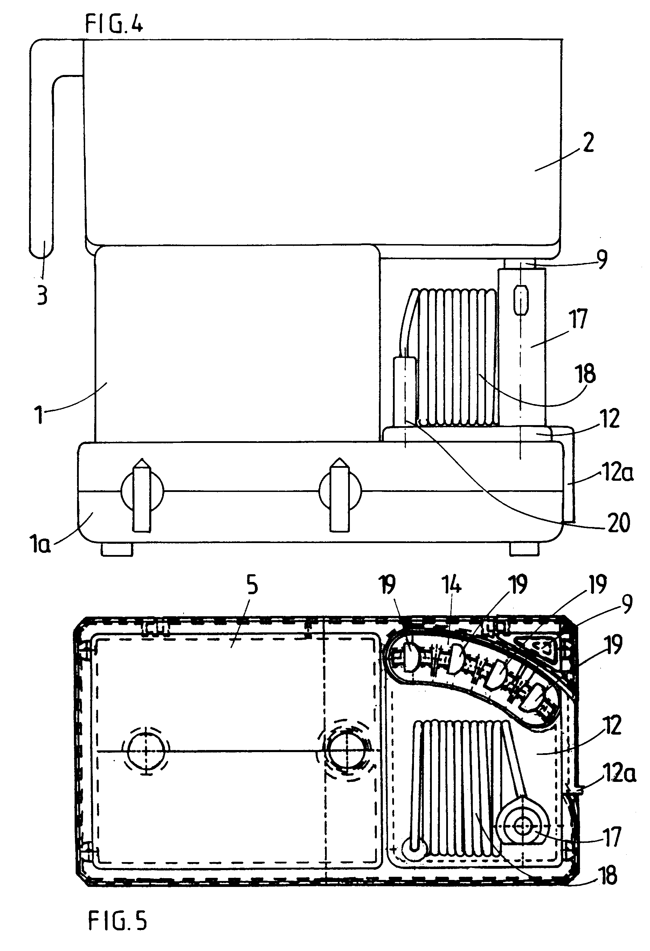

Le boîtier 1 a une forme générale étagée, la face supérieure de la moitié haute servant de face de support 5 pour le réservoir 2 en position opérante (figure 4) tandis que la face supérieure de la moitié basse sert de face de support 8 pour la plate-forme 12. Dans la position opérante du réservoir 2, une soupape 4 est en communication avec l'orifice d'entrée 6 du boîtier, lui-même connecté à l'entrée de la pompe. Un bossage de positionnement 7 formé sur le boîtier 1 est prévu pour s'engager dans un évidemment correspondant formé sur le fond du réservoir 2 pour assurer la position opérante correcte dudit réservoir. Dans cette position opérante, illustrée figure 4, le réservoir 2 recouvre la plate-forme 12 et sa stabilité est assurée par un petit pilier 9 formé sur face de support 8. La configuration est telle que, dans la position de non utilisation, le réservoir renversé sert de couvercle et recouvre le boîtier 1 et la plate-forme 12 ainsi que les éléments portés par cette dernière, à l'exception de la partie inférieure 1a du boîtier sur le côté latéral de laquelle se trouvent les boutons de manoeuvre et de réglage (figure 1).

En outre, la hauteur entre la plate-forme 12 et le fond du réservoir 2 dans sa position opérante est un peu supérieure à la longueur de la pièce-à-main 17 et des buses 19 pour que celles-ci puissent être placées dans cet espace (figure 4).

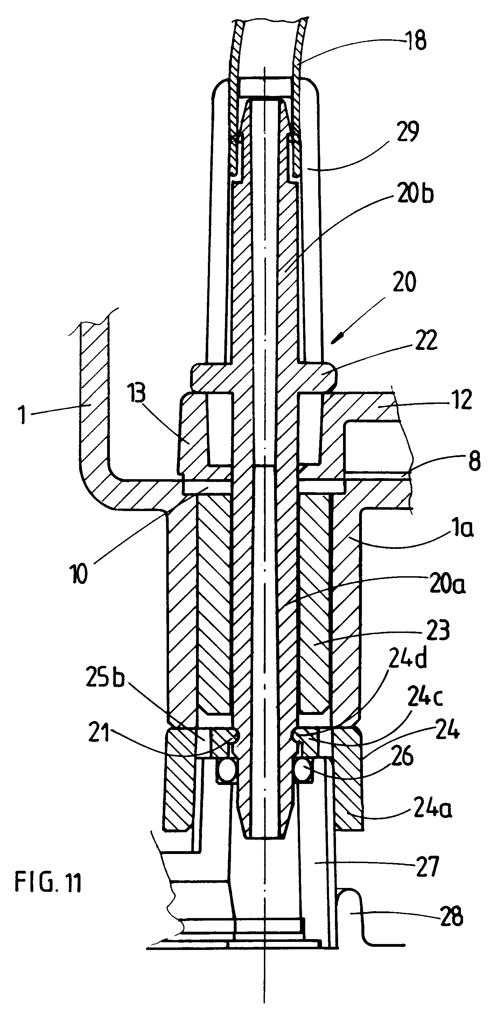

La plate-forme 12 est montée tournante autour de l'axe de l'orifice de sortie 10 du boîtier, au moyen d'un raccord tournant 20 formé par une tubulure (figure 11). L'extrémité du tuyau 18 connecté à l'orifice de sortie 10 est également montée mobile en rotation autour de l'axe du tuyau, donc de l'axe de l'orifice de sortie 10, par la même tubulure 20. Donc, le tuyau 18 peut tourner par rapport au boîtier 1 et par rapport à la plate-forme 12, laquelle peut tourner indépendamment par rapport au boîtier 1. Dans ce but, la plate-forme 12 est formée d'une pièce avec un manchon 13 qui se loge d'une manière tournante sur la tubulure 20 (figure 11).

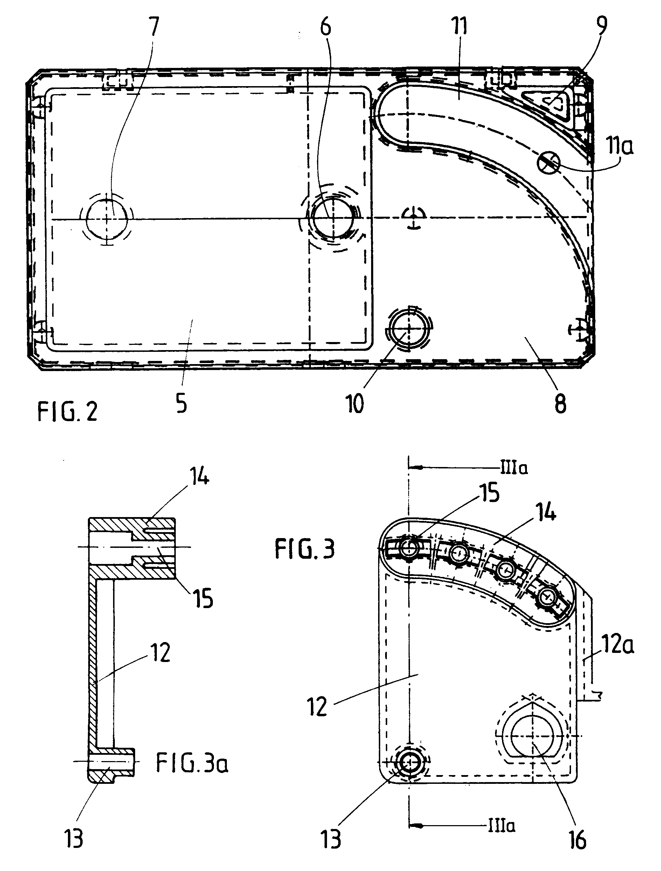

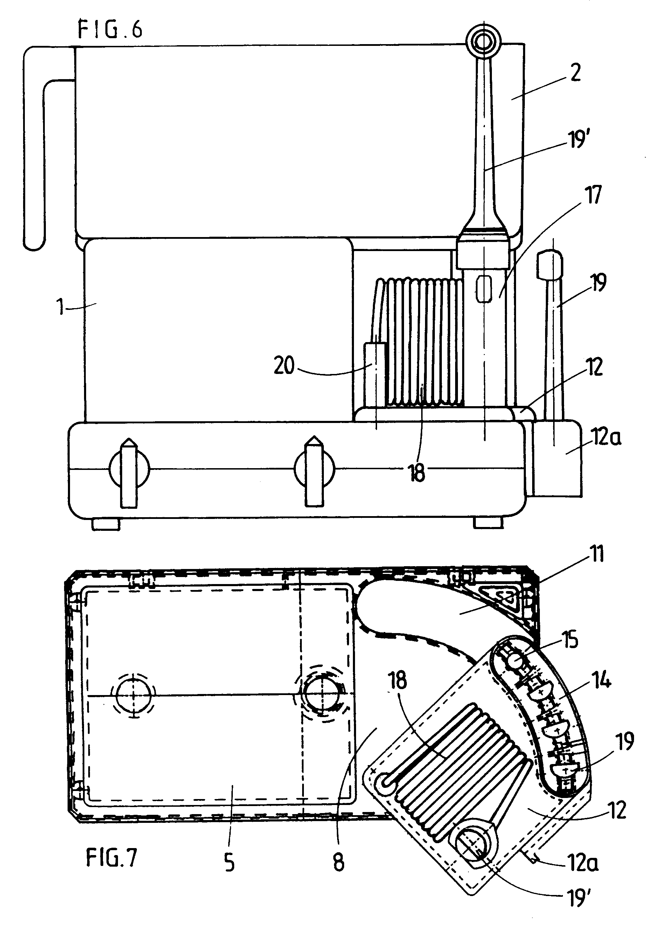

Comme montré figures 3 et 3a, la plate-forme 12 comporte un secteur courbé 14 avec une surépaisseur dirigée vers le bas, et sur lequel sont prévues quatre ouvertures 15 destinées à recevoir quatre buses 19 (figure 5). La face de support 8 du boîtier 1 est munie d'une rainure courbée correspondante 11 dans laquelle s'engage et peut glisser le secteur courbé 14 de la plate-forme 12. Le fond de cette rainure 11 est muni d'un orifice 11a (figure 2) permettant l'écoulement de l'eau. La plate-forme 12 est munie sur son bord latéral d'une projection 12a qui sert de poignée permettant de la manipuler plus facilement, et dans son angle dirigé vers l'avant de l'appareil d'une ouverture de réception 16 de la pièce-à-main 17 (figure 3).

Pour utiliser l'appareil, après avoir retourné le réservoir 2 et l'avoir posé sur la face de support 5 en position opérante, on pivote partiellement la plate-forme 12 dans une position de préparation (figures 6 et 7). Dans cette position intermédiaire, la pièce-à-main 17 se trouve dégagée du réservoir 2, ce qui permet de fixer sur elle une buse 19'. Ensuite, le réservoir 2 peut être rempli d'eau et replacé sur le boîtier sans risque qu'il se produise un écoulement d'eau à travers la pièce-à-main, comme cela serait le cas, selon le principe des vases communicants, si la buse n'était pas fixée.

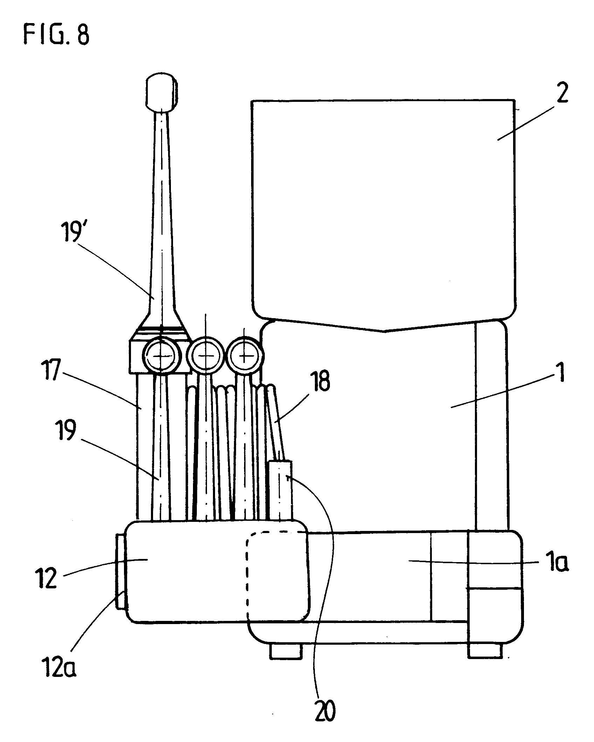

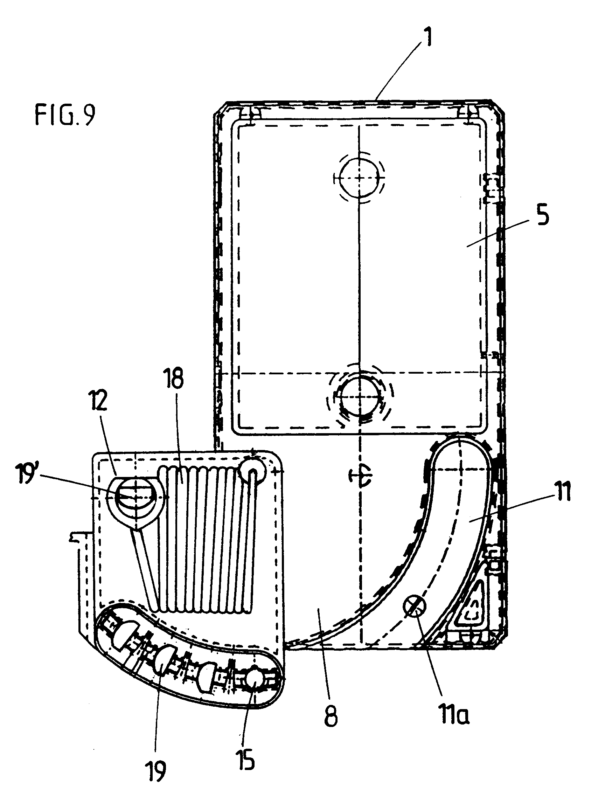

Pour que toutes les buses 19 portées par la plate-forme 12 ainsi que cette plate-forme elle-même soient librement accessibles, on fait complètement pivoter la plate-forme 12 jusqu'à sa position extrême la plus écartée (figures 8 et 9).

Il peut être prévu un encliquetage pour maintenir la plate-forme en position intermédiaire (figures 6 et 7) ou en position extrême (figures 8 et 9), ainsi que dans la position de retrait.

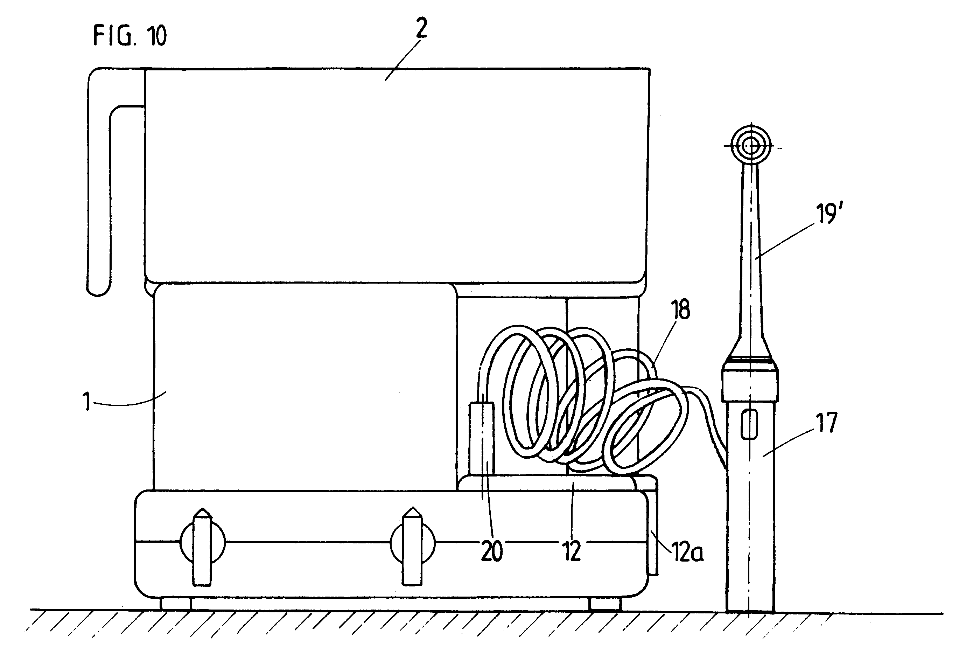

Après avoir écarté du boîtier 1 la pièce-à-main 17 sur laquelle a été fixée une buse 19', et avant de commencer le traitement, on replie la plate-forme 12 dans sa position de retrait pour qu'elle ne gêne pas la manipulation de ladite pièce-à-main. Cette position d'utilisation est illustrée figure 10. Bien entendu, dans cette position d'utilisation l'extrémité fixée du tuyau 18 est tournée par l'intermédiaire de la tubulure 20 autour de son axe pour que l'on puisse facilement écarter le tuyau 18 du boîtier 1 dans n'importe quelle direction afin d'éviter un contact avec le boîtier au cours de l'utilisation de la buse comme mentionné dans l'introduction.

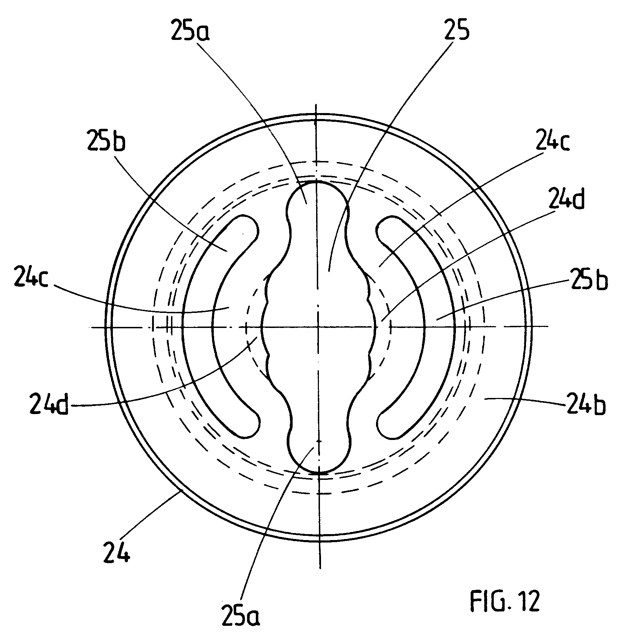

La figure 11 montre d'une manière plus détaillée l'arrangement du raccord tournant. La tubulure 20 est insérée, par sa partie intérieure 20a assez longue, dans l'orifice de sortie 10 de la partie inférieure 1a du boîtier 1 par l'intermédiaire d'une douille de guidage 23. L'extrémité inférieure de la tubulure 20 pénètre dans une ouverture d'une partie interne 27 du boîtier qui est fixée au fond 28 dudit boîtier 1. Pour rendre le raccord étanche, l'extrémité intérieure de la tubulure est entourée par un joint O-ring 26 inséré dans une rainure annulaire de la partie 27. En outre, il est prévu une douille de retenue 24, en matière plastique élastiquement déformable, en forme de capuchon dont la paroi périphérique 24a est serrée sur la partie 27. La paroi radiale 24b de la douille 24 a une ouverture centrale 25 (figure 12) traversée par la tubulure 20. Cette ouverture centrale 25 est prolongée par deux découpes 25a diamétralement opposées qui lui donnent une forme générale allongée et, de part et d'autre de celle-ci, sont prévues deux autres découpes courbées 25b qui délimitent deux languettes 24c. Le bord de ces languettes 24c dirigé vers le centre de l'ouverture est muni de projections 24d diamétralement opposées prévues pour engager une rainure annulaire 21 formée sur la périphérie de la tubulure 20 (figure 11). De cette façon, la tubulure 20 est tenue amoviblement par une sorte d'encliquetage des projections 24d dans la rainure 21 et, si l'on tire la tubulure 20 vers le haut, lesdites projections 24d peuvent s'écarter vers l'extérieur grâce aux découpes 25b qui donnent une certaine élasticité aux languettes 24c.

Sur la partie extérieure 20b de la tubulure 20 est posé le manchon 13 de la plate-forme 12, maintenu par une collerette 22 formée sur la tubulure, et à l'extrémité extérieure de la tubulure 20 est fixé le tuyau 18 serré par une frette 29. On voit que la tubulure 20, avec le tuyau 18 peuvent tourner dans l'orifice de sortie 10 pendant que la plate-forme 12 peut elle-même tourner indépendamment autour de cette tubulure 20. Si on enlève la tubulure 20, on peut facilement démonter la plate-forme 12, le manchon 13 étant ainsi libéré.

L'invention n'est pas limitée à la forme d'éxécution qui vient d'être décrite et des variantes pourraient être apportées sans pour cela sortir du cadre de l'invention. Notamment, comme il résulte de la description et de la position d'utilisation illustrée figure 10, le but principal de l'invention, à savoir l'écartement facile du tuyau du boitier au cours de l'utilisation, est réalisé grâce à la possibilité de rotation de l'extrémité du tuyau dans l'ouverture de sortie donc, en principe, il n'est pas absolument nécessaire que la plate-forme puisse également tourner.

Il est également possible que le raccord tournant soit formé par l'extrémité même du tuyau. Si la plate-forme est aussi pivotable, celle-ci est montée tournante autour du tuyau.

## Revendications

1. Appareil hydraulique pour les soins corporels, notamment les soins buccaux, comprenant un boîtier (1) dans lequel se trouve une pompe hydraulique produisant des pulsations de liquide, une pièce à main (17) destinée à porter une buse de giclage (19') ou une pièce à main contenant un moteur hydraulique et destinée à porter aussi une brosse à dents, ainsi qu'un tuyau (18) de connection reliant la pièce à main (17) à la pompe à travers un orifice de sortie (10) du boîtier (1), et un réservoir (2) de liquide supporté par le boîtier et relié à la pompe, ledit boîtier étant muni d'une plate-forme (12) sur laquelle sont logés, pendant la non utilisation, le tuyau (18) présenté en forme de ressort à boudin ainsi que la pièce à main (17), caractérisé en ce que l'extrémité du tuyau (18) connecté à l'orifice de sortie (10) du boîtier est installée mobile en rotation autour de l'axe du tuyau.

2. Appareil hydraulique pour les soins corporels, notamment les soins buccaux, comprenant un boîtier (1) dans lequel se trouve une pompe hydraulique produisant des pulsations de liquide, une pièce à main (17) destinée à porter une buse de giclage (19') ou une pièce à main contenant un moteur hydraulique et destinée à porter aussi une brosse à dents, ainsi qu'un tuyau (18) de connection reliant la pièce à main (17) à la pompe à travers un orifice de sortie (10) du boîtier (1), et un réservoir (2) de liquide supporté par le boîtier et relié à la pompe, ledit boîtier (1) étant muni d'une plate-forme (12) sur laquelle sont logés, pendant la non utilisation, le tuyau (18) présenté en forme d'un ressort à boudin ainsi que la pièce à main (17), caractérisé en ce que ladite plate-forme (12) est installée sur le boîtier (1) comme une partie mobile autour d'un axe perpendiculaire au plan de cette plate-forme, cet axe se confondant avec celui d'un raccord tournant (20) dudit tuyau (18) monté sur l'orifice de sortie (10) du boîtier (1).

3. Appareil hydraulique selon la revendication 2, caractérisé en ce que l'extrémité du tuyau (18) connecté à l'orifice de sortie (10) du boîtier (1) est installée mobile en rotation autour de l'axe du tuyau, séparémment de la rotation de ladite plate-forme (12).

4. Appareil hydraulique selon la revendication 3, caractérisé en ce que ledit raccord tournant est formé par une tubulure (20) s'engageant dans l'orifice de sortie (10) du boîtier (1) d'une manière étanche, montée mobile en rotation autour de son axe, la plate-forme (12) étant montée mobile autour de cette tubulure (20), de préférence au moyen d'un manchon (13), et qu'à l'extrémité extérieure de cette tubulure (20) est fixé le tuyau (18).

5. Appareil hydraulique selon la revendication 2, caractérisé en ce que ledit raccord tournant est formé par l'extrémité du tuyau (18) s'engageant dans l'orifice de sortie (10) du boîtier (1).

6. Appareil hydraulique selon l'une des revendications 1 à 5, caractérisé en ce qu'une partie du réservoir (2) en position de travail sur le boîtier (1) se trouve au dessus de ladite plate-forme (12).

7. Appareil hydraulique selon l'une des revendications 2 à 6, caractérisé en ce que la plate-forme (12) est encliquetable dans sa position de repos ainsi que dans au moins une position de travail.

8. Appareil hydraulique selon la revendication 7, caractérisé en ce qu'il y a au moins deux positions de travail situées dans un angle de rotation différent.

9. Appareil hydraulique selon l'une des revendications 2 à 8, caractérisé en ce que le tuyau (18) et/ou la plate-forme (12) sont installés d'une manière démontable, de préférence au moyen d'une tubulure (20) amovible tenue en position opérante par un encliquetage (21, 24d).

10. Appareil hydraulique selon l'une des revendications 1 à 9, caractérisé en ce que ladite plate-forme (12) porte, en outre, des buses (19) respectivement des brosses à dents de rechange.

11. Appareil hydraulique selon l'une quelconque des revendications 1 à 10, caractérisé en ce que le réservoir (2) a une configuration telle qu'en position de non utilisation de l'appareil, il sert, en position renversée, de couvercle et recouvre le boitier (1) et la plate-forme (12) ainsi que les éléments portés par cette dernière, y compris le tuyau, les buses de rechange et la pièce à main.

## Claims

1. A hydraulic apparatus for bodily care, in particular oral care, comprising a casing (1), in which is situated a hydraulic pump producing liquid pulsations, a handpiece (17) intended to support a spraying nozzle (19') or a handpiece containing a hydraulic motor and intended also to support a toothbrush, as well as a connection pipe (18) connecting the handpiece (17) to the pump through an outlet orifice (10) of the casing (1), and a liquid reservoir (2) supported by the casing and connected to the pump, said casing being equipped with a platform (12), on which are accommodated, during non-utilization, the pipe (18), presented in the form of a helical spring, as well as the handpiece (17), characterized in that the end of the pipe (18) connected to the outlet orifice (10) of the casing is installed rotationally movably about the axis of the pipe.

2. A hydraulic apparatus for bodily care, in particular oral care, comprising a casing (1), in which is situated a hydraulic pump producing liquid pulsations, a handpiece (17) intended to support a spraying nozzle (19') or a handpiece containing a hydraulic motor and intended also to support a toothbrush, as well as a connection pipe (18) connecting the handpiece (17) to the pump through an outlet orifice (10) of the casing (1), and a liquid reservoir (2) supported by the casing and connected to the pump, said casing (1) being equipped with a platform (12), on which are accommodated, during non-utilization, the pipe (18), presented in the form of a helical spring, as well as the handpiece (17), characterized in that said platform (12) is installed on the casing (1) as a part which is movable about an axis perpendicular to the plane of this platform, this axis coinciding with that of a turning adapter (20) of said pipe (18) mounted on the outlet orifice (10) of the casing (1).

3. The hydraulic apparatus as claimed in claim 2, characterized in that the end of the pipe (18) connected to the outlet orifice (10) of the casing (1) is installed rotationally movably about the axis of the pipe, separately from the rotation of said platform (12).

4. The hydraulic apparatus as claimed in claim 3, characterized in that said turning adapter is formed by a tubular connector (20) which engages in the outlet orifice (10) of the casing (1) in a sealed manner and is mounted rotationally movably about its axis, the platform (12) being mounted movably about this tubular connector (20), preferably by means of a sleeve (13), and in that the pipe (18) is fixed at the external end of this tubular connector (20).

5. The hydraulic apparatus as claimed in claim 2, characterized in that said turning adapter is formed by the end of the pipe (18) engaging in the outlet orifice (10) of the casing (1).

6. The hydraulic apparatus as claimed in one of claims 1 to 5, characterized in that a part of the reservoir (2) in working position on the casing (1) is situated above said platform (12).

7. The hydraulic apparatus as claimed in one of claims 2 to 6, characterized in that the platform (12) can be locked in its rest position as well as in at least one working position.

8. The hydraulic apparatus as claimed in claim 7, characterized in that there are at least two working positions situated at a different angle of rotation.

9. The hydraulic apparatus as claimed in one of claims 2 to 8, characterized in that the pipe (18) and/or the platform (12) are installed in a detachable manner, preferably by means of a removable tubular connector (20) held in operating position by a catch (21, 24d).

10. The hydraulic apparatus as claimed in one of claims 1 to 9, characterized in that said platform (12) supports, moreover, spare nozzles (19) or toothbrushes respectively.

11. The hydraulic apparatus as claimed in one of the claims 1 to 10, characterized in that the reservoir (2) has such a form that, in the non-utilization position of the apparatus, it serves, in inverted position, as a cover and covers the casing (1) and the platform (12) as well as the elements supported by the latter, including the pipe, the spare nozzles and the handpiece.

## Patentansprüche

1. Hydraulisches Gerät zur Körperpflege, insbesondere zur Mundpflege, mit einem Gehäuse (1), in dem eine Flüssigkeitsimpulse erzeugende Hydropumpe untergebracht ist, mit einem Handstück (17), welches dazu vorgesehen ist, eine Spritzdüse (19') zu tragen, oder mit einem Handstück, das einen Hydromotor enthält und dazu vorgesehen ist, auch eine Zahnbürste zu tragen, sowie mit einem Verbindungsschlauch (18), der das Handstück (17) mit der Pumpe durch eine Ausgangsöffnung (10) des Gehäuses (1) verbindet, und mit einem Flüssigkeitsbehälter (2), der vom Gehäuse getragen wird und mit der Pumpe verbunden ist, wobei das genannte Gehäuse (1) mit einer Plattform (12) versehen ist, auf welcher bei Nichtbenutzung der in Gestalt einer Schraubenfeder geformte Schlauch (18) sowie das Handstück (17) angeordnet sind, dadurch gekennzeichnet, dass das Ende des mit der Ausgangsöffnung (10) des Gehäuses verbundenen Schlauchs (18) um die Schlauchachse drehbar angeordnet ist.

2. Hydraulisches Gerät zur Körperpflege, insbesondere zur Mundpflege, mit einem Gehäuse (1), in dem eine Flüssigkeitsimpulse erzeugende Hydropumpe untergebracht ist, mit einem Handstück (17), welches dazu vorgesehen ist, eine Spritzdüse (19') zu tragen, oder mit einem Handstück, das einen Hydromotor enthält und dazu vorgesehen ist, auch eine Zahnbürste zu tragen, sowie mit einem Verbindungsschlauch (18), der das Handstück (17) mit der Pumpe durch eine Ausgangsöffnung (10) des Gehäuses (1) verbindet, und mit einem Flüssigkeitsbehälter (2), der vom Gehäuse getragen wird und mit der Pumpe verbunden ist, wobei das genannte Gehäuse (1) mit einer Plattform (12) versehen ist, auf welcher bei Nichtbenutzung der in Gestalt einer Schraubenfeder geformte Schlauch (18) sowie das Handstück (17) angeordnet sind, dadurch gekennzeichnet, dass die genannte Plattform (12) auf dem Gehäuse (1) als ein um eine zur Ebene dieser Plattform senkrechte Achse bewegliches Teil angeordnet ist, wobei diese Achse mit der Achse eines drehbaren, auf der Ausgangsöffnung (10) des Gehäuses (1) montierten Verbindungsstücks (20) des genannten Schlauchs (18) zusammenfällt.

3. Hydraulisches Gerät nach Anspruch 2, dadurch gekennzeichnet, dass das Ende des an die Ausgangsöffnung (10) des Gehäuses (1) angeschlossenen Schlauchs (18) um die Schlauchachse drehbar montiert ist, unabhängig von der Drehung der genannten Plattform (12).

4. Hydraulisches Gerät nach Anspruch 3, dadurch gekennzeichnet, dass das genannte drehbare Verbindungsstück aus einem Rohrstutzen (20) besteht, welcher dicht in die Ausgangsöffnung (10) des Gehäuses (1) eingreift und um seine Achse drehbar montiert ist, wobei die Plattform (12) um den Rohrstutzen beweglich montiert ist, vorzugsweise mittels einer Muffe (13), und dass der Schlauch (18) am äusseren Ende dieses Rohrstutzens (20) befestigt ist.

5. Hydraulisches Gerät nach Anspruch 2, dadurch gekennzeichnet, dass das genannte drehbare Verbindungsstück vom Ende des Schlauchs (18) gebildet ist, welches in die Ausgangsöffnung (10) des Gehäuses (1) eingreift.

6. Hydraulisches Gerät nach einem der Ansprüche 1 bis 5, dadurch gekennzeichnet, dass ein Teil des sich in Arbeitsstellung auf dem Gehäuse (1) befindenden Behälters (2) über der genannten Plattform (12) liegt.

7. Hydraulisches Gerät nach einem der Ansprüche 2 bis 6, dadurch gekennzeichnet, dass die Plattform (12) in Ruhestellung sowie in Arbeitsstellung einrastbar ist.

8. Hydraulisches Gerät nach Anspruch 7, dadurch gekennzeichnet, dass es wenigstens zwei Arbeitsstellungen gibt, die sich durch ihren Drehwinkel unterscheiden.

9. Hydraulisches Gerät nach einem der Ansprüche 2 bis 8, dadurch gekennzeichnet, dass der Schlauch (18) und/oder die Plattform (12), vorzugsweise mittels eines lösbaren Rohrstutzens (20), abmontierbar angeordnet sind, welcher in Arbeitsstellung durch eine Rastung (21, 24 d) gehalten wird.

10. Hydraulisches Gerät nach einem der Ansprüche 1 bis 9, dadurch gekennzeichnet, dass die genannte Plattform (12) ausserdem Ersatzspritzdüsen (19) bzw. Ersatzzahnbürsten trägt.

11. Hydraulisches Gerät nach einem der Ansprüche 1 bis 10, dadurch gekennzeichnet, dass der Behälter (2) so gestaltet ist, dass er bei Nichtbenutzung des Geräts in umgekippter Lage als Deckel dient und das Gehäuse (1), die Plattform (12) sowie die von der Plattform getragenen Elemente, einschliesslich des Schlauchs, der Ersatzspritzdüsen und des Handstücks, überdeckt.
